# EUROPEAN PATENT APPLICATION

(11) **EP 2 023 014 A1**
(43) Date of publication of application: **11.02.2009**
(21) Application number: 08014194.8
(22) Date of filing: 08.08.2008
(51) Int. Cl.: F16H 57/04, F16H 63/32

(54) **Lubrication device for a synchromesh transmission**

(30) Priority: 10.08.2007 JP 2007209334
(71) Applicant: AISIN AI Co., Ltd., Nishio-shi, Aichi-ken (JP)
(72) Inventor: Ohmori, Makoto, Nishio-shi Aichi-ken (JP); Kayukawa, Norio, Nishio-shi Aichi-ken (JP); Kobayashi, Kazutaka, Nishio-shi Aichi-ken (JP)
(74) Representative: Serjeants

(57) **Abstract**

A synchromesh gear transmission incorporating a fork (8) mounted on a fork shaft (9) for moving a synchromesh sleeve (7) of the transmission to engage and disengage at least one transmission gear (4), and a piped lubrication system for delivering lubricant to the transmission, wherein the piped lubrication system comprises lubricant passages (91,92,93) through the shift fork shaft (9) for delivering lubricant in use to one or more positions near to the transmission gear or gears (4) and the sleeve (7).

## Description

### FIELD OF THE INVENTION

The present invention relates to a transmission.

### BACKGROUND

Generally, some lubrication methods for a transmission are known. For example, a splash lubrication method, in which a splash by a gear (transmission gear) is utilized, and a dry sump method, in which a pipe is utilized, are known as the lubrication methods for the transmission. For example, JP2001-124190A describes a lubrication apparatus for a transmission, in which a bearing surface of a gear attached to a shaft of the transmission is lubricated by lubricant splashed by the gear.

However, with this method, in which the splash by the gear is utilized, it is difficult to supply the lubricant securely between engaging surfaces and sliding surfaces, or the like, of members. With this method, in which the pipe is utilized, when a position to be lubricated is distant from an outlet of the pipe, similarly to the splash lubrication method by the gear, it is difficult to lubricate securely. If the pipe is arranged thoroughly in the transmission so as to securely supply the lubricant, a structure of the pipe tends to be complex in a limited space in the transmission, which may cause cost increase.

With the method to splash the lubricant by means of the rotating gear described in JP2001-124190A, because it is difficult to supply the lubricant securely to target portions to be lubricated, for example, sliding surfaces of a sleeve and a fork, sufficient and efficient lubrication cannot be performed.

A need thus exists for a transmission, in which engaging surfaces of gears, sliding surfaces of a sleeve and a fork, and the like can be efficiently lubricated.

### SUMMARY OF THE INVENTION

According to an aspect of the present invention, a transmission includes a rotary shaft, a clutch hub fixed to the rotary shaft and having engaging teeth at an outer periphery of the clutch hub, a transmission gear rotatably provided at the rotary shaft, a gear piece connected to the transmission gear at the side of the clutch hub and having engaging teeth at an outer periphery of the gear piece, a synchronizer ring positioned between the clutch hub and the gear piece, a sleeve having engaging teeth, which engage with the engaging teeth of the clutch hub and the engaging teeth of the gear piece, the sleeve being held by the clutch hub and being slidable in an axial direction, a fork having an arc-shaped portion having a facing surface facing an outer peripheral surface of the sleeve and engaging with the outer peripheral surface of the sleeve and being slidable in a circumferential direction and a connecting portion positioned at an opposite side of the facing surface of the arc-shaped portion, a fork shaft connected to the connecting portion of the fork as a unit for shifting the fork in the axial direction to move the sleeve in the axial direction between a neutral position and a shift position. The engaging teeth of the sleeve engage with the engaging teeth of the clutch hub in the neutral position. The engaging teeth of the sleeve engage with the engaging teeth of the clutch hub and the engaging teeth of the gear piece in the shift position. The transmission performs synchronization operation of rotation of the clutch hub and the transmission gear, on the basis of a gear shift operation, by shifting the fork in the axial direction by the fork shaft, by sliding the sleeve from the neutral position to the side of the gear piece, by frictionally engaging the synchronizer ring with the gear piece. The fork shaft has an in-shaft lubricant passage provided therein, a lubricant supply passage, and a lubricant outlet passage. A first end of the lubricant supply passage opens to the in-shaft lubricant passage. A second end of the lubricant supply passage opens to an outside of the fork shaft. A first end side of the lubricant outlet passage opens to the in-shaft lubricant passage. A second end side of the lubricant outlet passage opens at a position near the transmission gear and the sleeve.

According to the aspect of the present invention, the fork shaft for shifting transmission gears is utilized for supplying lubricant to the transmission gear, sliding surfaces of the sleeve and the fork and sliding surfaces of the synchronizer ring and the gear piece, or the like. The in-shaft lubricant passage, through which the lubricant flows, is formed in the fork shaft. The lubricant outlet passage, which opens for supplying the lubricant to the vicinity of the transmission gear, and to the vicinity of a position, at which the sleeve slides on the fork, from the in-shaft lubricant passage, is formed in the transmission according to the aspect of the present invention.

In the transmission according to the aspect of the present invention, the fork shaft, which has been existent in the transmission and which is near the engaging teeth of the transmission gear, the sliding surfaces of the sleeve and the fork or the engaging teeth of the clutch hub, the sliding surfaces of the synchronizer ring and the gear piece, or the like, which are to be lubricated, is utilized to form the passage, through which the lubricant flows. Accordingly, the lubricant can be squirted from a near position and lubrication can be efficiently performed. In addition, because an opening for squirting the lubricant is formed at the near position, a complex pipe structure can be decreased and costs can be decreased.

According to another aspect of the present invention, the second end side of the lubricant outlet passage of the fork shaft opens at a portion, at which the connecting portion of the fork connects with the fork shaft. The fork includes a fork-through-passage. A first end side of the fork-through-passage opens to the connecting portion and a second end side of the fork-through-passage opens at the facing surface of the arc-shaped portion. According to the aspect of the present invention, even when the sleeve and the fork are moved by a gear shift operation, because the passage for supplying the lubricant is formed in the fork shaft and the fork, which move simultaneously with the sleeve and the fork, the lubricant can be directly supplied to the sliding surfaces of the sleeve and the fork. In other words, because the lubricant is supplied to the sliding surfaces to be lubricated without being affected by the gear shift operation, efficient lubrication can be attained.

According to the aspects of the present invention, in the transmission, the passage, in which the lubricant flows, is formed in the fork shaft, which shifts the sleeve for selecting transmission gears. Accordingly, the complex pipe structure in a limited space of the transmission can be decreased and costs can be decreased. In addition, because the lubricant outlet passage is formed and opens from the in-shaft lubricant passage in the fork shaft, in which the lubricant flows, to the vicinity of the engaging teeth of the transmission gear, the sliding surfaces of the sleeve and the fork, the engaging teeth of the clutch hub, the sliding surfaces of the synchronizer ring and the gear piece, or the like, the lubricant can be squirted from the near position and efficient lubrication can be attained.

Further, because the fork-through-passage is formed in the fork and penetrates from the connecting portion, at which the fork connects with the fork shaft, into the fork and opens at the facing surface of the fork, the passage for supplying the lubricant moves even when the fork and the fork shaft are moved by the gear shift operation. Accordingly, the lubricant can be securely supplied to the sliding surfaces of the sleeve and the fork.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a cross-sectional view illustrating a structure of a transmission according to a first embodiment;

Fig. 2 is a perspective view illustrating a sleeve and a fork of the transmission according to the first embodiment;

Fig. 3 is a side view illustrating the sleeve and the fork of the transmission according to the first embodiment; and

Fig. 4 is a cross-sectional view illustrating a structure of a transmission according to a first modified embodiment.

### DETAILED DESCRIPTION

A transmission according to a first embodiment of the present invention will be specifically explained taking an example that the transmission is utilized for transmitting motive energy from an internal combustion engine of a vehicle to a driving wheel.

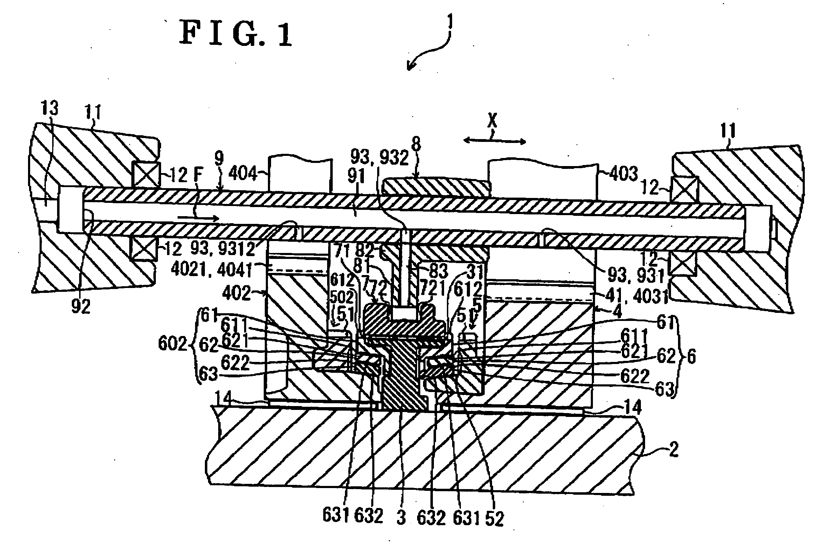

Fig. 1 is a partial cross-sectional view illustrating a transmission according to the first embodiment. The transmission 1 according to the first embodiment includes, in a housing 11, a first rotary shaft 2 (rotary shaft), a clutch hub 3, a first transmission gear 4 (transmission gear), a second transmission gear 402, a first gear piece 5 (gear piece), a second gear piece 502, a first synchronizer ring 6 (synchronizer ring), a second synchronizer ring 602, a sleeve 7, a fork 8 and a fork shaft 9.

The internal combustion engine (not illustrated) outside the transmission 1 transmits motive energy to the first rotary shaft 2 to rotate. The clutch hub 3 is fixed to the first rotary shaft 2 and rotates as a unit with the first rotary shaft 2. The clutch hub 3 includes an engaging teeth 31 formed at an outer periphery of the clutch hub 3.

The first transmission gear 4 and the second transmission gear 402 are provided at the first rotary shaft 2 through bearings 14 so that the first transmission gear 4 and the second transmission gear 402 are rotatable relative to the first rotary shaft 2. The first transmission gear 4 and the second transmission gear 402 are placed so that the clutch hub 3 is placed between the first transmission gear 4 and the second transmission gear 402. Specifically, the clutch hub 3, the first transmission gear 4 and the second transmission gear 402 are aligned along an axial direction (a direction of an arrow X). In other words, the first transmission gear 4 and the second transmission gear 402 are placed at right and left sides of the clutch hub 3 respectively in Fig. 1. The first transmission gear 4 engages with a third transmission gear 403 through the engaging teeth 41 of the first transmission gear 4 and engaging teeth 4031 of the third transmission gear 403. The second transmission gear 402 engages with a fourth transmission gear 404 through engaging teeth 4021 of the second transmission gear 402 and engaging teeth 4041 of the fourth transmission gear 404. The third transmission gear 403 and the fourth transmission gear 404 are provided at a second rotary shaft (not illustrated) other than the first rotary shaft 2.

Structures and operations of the transmission 1 will be explained with respect to the first transmission gear 4, the first gear piece 5 and the first synchronizer ring 6. Structures and operations of the transmission 1 with respect to the second transmission gear 402, the second gear piece 502 and the second synchronizer ring 602 are similar to those of the first transmission gear 4, the first gear piece 5 and the first synchronizer ring 6. Some parts and portions of the second gear piece 502 and the second synchronizer ring 602 are numbered as same as the first gear piece 5 and the first synchronizer ring 6. The first gear piece 5 is positioned between the clutch hub 3 and the first transmission gear 4. The first gear piece 5 is connected to the first transmission gear 4. The first gear piece 5 includes engaging teeth 51 at an outer periphery of the first gear piece 5 at the side of the first transmission gear 4. The first gear piece 5 includes a gear-piece-sliding-surface 52 formed at an outer periphery of the first gear piece 5 at the side of the clutch hub 3. The gear-piece-sliding-surface 52 slides on an inner sliding surface 632 of an inner ring 63 of the first synchronizer ring 6. The inner sliding surface 632 of the inner ring 63 of the first synchronizer ring 6 will be described below.

The first synchronizer ring 6 is positioned between the clutch hub 3 and the first transmission gear 4 (first gear piece 5). The first synchronizer ring 6 includes three rings, which are an outer ring 61, a middle ring 62 and the inner ring 63. The three rings are placed coaxially with the first rotary shaft 2 and placed in an order of the outer ring 61, the middle ring 62 and the inner ring 63 from an outer peripheral side of the first synchronizer ring 6. The outer ring 61 and the inner ring 63 engage with the clutch hub 3. The middle ring 62 engages with the first gear piece 5. The outer ring 61 includes an inner sliding surface 611 formed at an inner periphery of the outer ring 61 and engaging teeth 612 formed at an outer periphery of the outer ring 61. An inner diameter of the inner periphery of the outer ring 61 increases toward the first gear piece 5, in other words, the inner sliding surface 611 of the outer ring 61 is tapered. The middle ring 62 includes an outer sliding surface 621 formed at an outer periphery of the middle ring 62 and an inner sliding surface 622 formed at an inner periphery of the middle ring 62. The outer sliding surface 621 of the middle ring 62 slides on the inner sliding surface 611 of the outer ring 61. A diameter of the outer periphery of the middle ring 62 increases toward the first gear piece 5, in other words, the outer sliding surface 621 of the middle ring 62 is tapered. The inner ring 63 includes an outer sliding surface 631 formed at an outer periphery of the inner ring 63 and an inner sliding surface 632 formed at an inner periphery of the inner ring 63. The outer sliding surface 631 of the inner ring 63 slides on the inner sliding surface 622 of the middle ring 62. The diameter of the outer periphery of the inner ring 63 increases toward the first gear piece 5, in other words, the outer sliding surface 631 of the inner ring 63 is tapered.

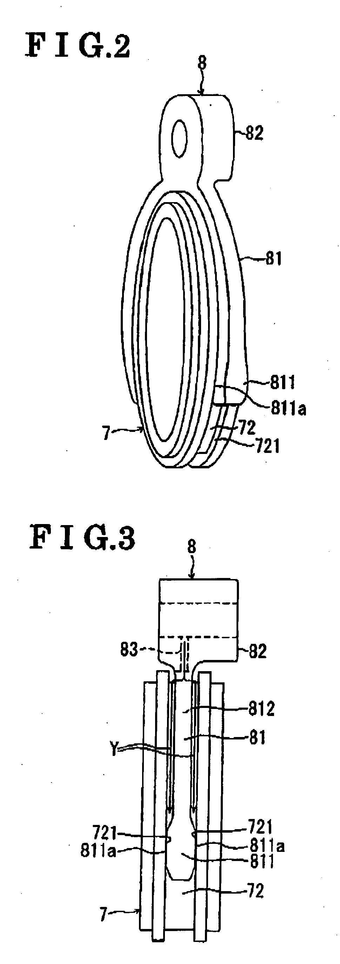

The sleeve 7 is held coaxially with the first rotary shaft 2 and the clutch hub 3 and slidably on the clutch hub 3 in the axial direction. The sleeve 7 includes engaging teeth 71 formed at the inner periphery of the sleeve 7. The engaging teeth 71 of the sleeve 7 can engage with the engaging teeth 31 of the clutch hub 3, the engaging teeth 612 of the outer ring 61 and the engaging teeth 51 of the first gear piece 5. As illustrated in Fig. 2 and Fig. 3, the sleeve 7 includes a groove portion 72 formed at an outer peripheral side of the sleeve 7. The groove portion 72 of the sleeve 7 has a cross-sectional shape of a rectangular recess. An arc-shaped portion 81 of the fork 8, which will be described below, is placed at the groove portion 72 of the sleeve 7. The arc-shaped portion 81 of the fork 8 is freely movable in a circumferential direction. The groove portion 72 includes a groove-sliding-surface 721 formed at a side surface of the groove portion 72. The groove-sliding-surface 721 is slidable on a sliding surface 811a of a nail portion 811 of the arc-shaped portion 81.

The fork 8 is placed at an outer peripheral side of the sleeve 7. The fork 8 includes the arc-shaped portion 81, a connecting portion 82 and a fork-through-passage 83. The arc-shaped portion 81 has an arc shape along the groove portion 72 of the sleeve 7. The arc-shaped portion 81 includes a facing surface 812 facing a bottom surface of the groove portion 72 and formed at an inner peripheral surface of the arc-shaped portion 81. The arc-shaped portion 81 includes the fork-nail-portion 811 formed at an end portion of the arc-shaped portion 81, The fork-nail-portion 811 includes the sliding surface 811a at the side surface of the fork-nail-portion 811. The sliding surface 811a is slidable on the groove-sliding-surface 721 of the sleeve 7. The connecting portion 82 is connected to the fork shaft 9, which will be described below, at an outer peripheral side of the arc-shaped portion 81. The fork-through-passage 83 opens at the facing surface 812 and at an inner peripheral surface of the connecting portion 82 of the arc-shaped portion 81. The fork-through-passage 83 penetrates in the fork 8 in a diametrical direction. An opening at the inner peripheral surface of the connecting portion 82 is positioned higher than an opening at the facing surface 812 in a perpendicular direction.

Explanations will be made with reference to Fig. 1 again. The fork shaft 9 is connected to the connecting portion 82 of the fork 8 as a unit. The fork shaft 9 is positioned in an axial direction almost the same as the axial direction of the first rotary shaft 2. The fork shaft 9 is attached to the housing 11 and sealed by oil seals 12. The fork shaft 9 does not rotate in a circumferential direction but is slidable in the axial direction. The fork shaft 9 includes an in-shaft lubricant passage 91, a lubricant supply passage 92 and a lubricant outlet passage 93. The in-shaft lubricant passage 91 is a hollow passage formed in the fork shaft 9 in the axial direction from a first end of the fork shaft 9 to a second end of the fork shaft 9.

The lubricant supply passage 92 is provided at the first end side of the fork shaft 9. The lubricant supply passage 92 is a passage for supplying lubricant to the in-shaft lubricant passage 91 from the outside of the fork shaft 9. The lubricant is supplied to the lubricant supply passage 92, for example, by pumping the lubricant stored on a bottom portion of the housing 11 by a pump (not illustrated), through an external supply passage 13. The lubricant outlet passage 93 penetrates from the in-shaft lubricant passage 91 to the outer periphery of the fork shaft 9. The lubricant outlet passage 93 includes a first-outlet-passage-for-gear 931, a second-outlet-passage-for-gear 9312 and an outlet-passage-for-fork 932. The first-outlet-passage-for-gear 931 is provided at the fork shaft 9 and is facing a center position of the first transmission gear 4 in the axial direction. The second-outlet-passage-for-gear 9312 is provided at the fork shaft 9 and is facing a center position of the second transmission gear 4 in the axial direction. From here on, explanations for the first-outlet-passage-for-gear-931 can be similarly applied to the second-outlet-passage-for-gear-9312. A first end side of the first-outlet-passage-for-gear 931 opens to the in-shaft lubricant passage 91 and a second end side of the first-outlet-passage-for-gear 931 opens to the vicinity of the engaging teeth 41 of the first transmission gear 4. A direction of the first-outlet-passage-for-gear 931 is not necessarily in a perpendicular direction. The opening of the first-outlet-passage-for-gear 931 at the side of the in-shaft lubricant passage 91 is positioned at a higher position. It is desirable that the first-outlet-passage-for-gear 931 is formed in a direction that the lubricant can be squirted from the in-shaft lubricant passage 91 of the fork shaft 9 toward the engaging teeth 41 of the first transmission gear 4. The outlet-passage-for-fork 932 is arranged so as to face the opening of the fork-through-passage 83 of the fork 8 in the vicinity of the connecting portion 82 in the axial direction. A first end side of the outlet-passage-for-fork 932 opens to the in-shaft lubricant passage 91 and a second end side of the outlet-passage-for-fork 932 opens to the first end side of the fork-through-passage 83 of the fork 8. The opening of the outlet-passage-for-fork 932 at the side of the in-shaft lubricant passage 91 is positioned at a higher position. A position of the opening of the outlet-passage-for-fork 932 at the side of the inner peripheral surface of the connecting portion 82 matches that of the opening of the fork-through-passage 83 of the fork 8. A width (diameter) of the outlet-passage-for-fork 932 is larger than that of the first-outlet-passage-for-gear 931. However, it is possible that the width of the outlet-passage-for-fork 932 is the same as that of the first-outlet-passage-for-gear 931. It is also possible that the width of the first-outlet-passage-for-gear 931 is larger than that of the outlet-passage-for-fork 932. In addition, a width of the second-outlet-passage-for-gear 9312 can be same as, larger than or smaller than that of the outlet-passage-for-fork-932. The width of the first-outlet-passage-for-gear 931, the width of the second-outlet-passage-for-gear 9312 and the width of the outlet-passage-for-fork 932 are formed according to the amount of the lubricant to be supplied to respective portions.

The fork shaft 9 shifts the fork 8 in the axial direction. When the fork 8 is shifted by the fork shaft 9, the sliding surface 811a of the nail portion 811 engages with the groove-sliding-surface 721 of the groove portion 72 of the sleeve 7. At this time, the sliding surface 811a of the nail portion 811 can slide on the groove-sliding-surface 721 of the groove portion 72 of the sleeve 7 in the circumferential direction. Then, the sleeve 7, which engages with the fork 8, is pushed by the fork 8 so as to slide in the axial direction. The sleeve 7 slides between a neutral position and a shift position. In the neutral position, the engaging teeth 71 of the sleeve 7 engage with the engaging teeth 31 of the clutch hub 3. In the shift position, the sleeve 7 is shifted to the side of the first transmission gear 4 so that the engaging teeth 71 of the sleeve 7 engages with the engaging teeth 31 of the clutch hub 3, the engaging teeth 612 of the outer ring 61 and the engaging teeth 51 of the first gear piece 5.

Gear shifting of a vehicle is performed, in response to a gear shift operation (shift operation) by a driver, by shifting the fork 8 in the axial direction by the fork shaft 9 and by shifting the sleeve 7 from the neutral position to the side of the first gear piece 5 in a first direction of the axial direction. In the shift operation, firstly, the engaging teeth 71 of the sleeve 7 engage with the engaging teeth 612 of the outer ring 61 and the sleeve 7 shifts to the side of the first gear piece 5. As a result, friction is generated between the inner sliding surface 611 of the outer ring 61 and the outer sliding surface 621 of the middle ring 62 and between the outer sliding surface 631 of the inner ring 63 and the inner sliding surface 622 of the middle ring 62. Then, as the shift operation proceeds, friction is generated between the gear-piece-sliding-surface 52 of the first gear piece 5 and the inner sliding surface 631 of the inner ring 63. Then, when a difference between rotations of the first gear piece 5 and the sleeve 7 become zero, the sleeve 7 further shifts pushing and moving aside the outer ring 61. Then, the engaging teeth 71 of the sleeve 7 slidably contact with the engaging teeth 51 of the first gear piece 5, and the engaging teeth 71 of the sleeve 7 completely engage with the engaging teeth 51 of the first gear piece 5. Consequently, synchronization operation is completed so as to achieve the gear shifting.

Next, a state of lubrication of the transmission 1 according to the first embodiment will be explained. The lubricant is supplied to the in-shaft lubricant passage 91 from the external supply passage 13 through the lubricant supply passage 92 of the fork shaft 9. The lubricant supplied to the in-shaft lubricant passage 91 flows in the in-shaft lubricant passage 91 to an opposite side of the lubricant supply passage 92 in the axial direction (arrow F direction). The lubricant in the in-shaft lubricant passage 91 is discharged from each lubricant outlet passage 93 to an outside of the in-shaft lubricant passage 91. The lubricant discharged from the first-outlet-passage-for-gear 931 is squirted (flows out) to the vicinity of the engaging teeth 41 of the first transmission gear 4. The lubricant discharged from the outlet-passage-for-fork 932 flows into the fork-through-passage 83 and is squirted (flows out) to the groove portion 72 of the sleeve 7 from the opening positioned at the facing surface 812 of the fork 8.

The squirted lubricant from the first-outlet-passage-for-gear 931 lubricates the engaging teeth 41 of the first transmission gear 4. Because the lubricant is supplied from the position near the engaging teeth 41 of the first transmission gear 4, the engaging teeth 41 of the first transmission gear 4 can be lubricated efficiently. Further, the lubricant squirted from the outlet-passage-for-fork 932 flows on the groove portion 72 of the sleeve 7 (arrow Y of Fig. 3) and lubricates between the sliding surface 811a of the fork-nail-portion 811 and the groove-sliding-surface 721 of the groove portion 72. It is difficult to supply the lubricant between the sleeve 7 and the fork 8 by lubrication from the side of the first rotary shaft 2. Further, when a pipe is utilized, arrangement of the pipe becomes complex. However, according to the first embodiment, because the lubrication is performed by the passage penetrating from the fork shaft 9 into the fork 8, the lubricant can be directed and supplied to the groove portion 72, at which the sleeve 7 engages with the fork 8.

In the transmission 1 according to the first embodiment, the fork shaft 9, which shifts the sleeve 7 to select the first transmission gear 4 or the second transmission gear 402, is formed as a pipe shape. Accordingly, a complex pipe in a limited space of the transmission 1 is not necessary, and costs can be decreased. Further, it is easy to form the fork shaft 9 as a pipe shape and to provide the in-shaft lubricant passage 91 and the lubricant outlet passage 93. Accordingly, additional processing can be reduced.

Further, because the fork shaft 9 includes the in-shaft lubricant passage 91, in which the lubricant flows, and the first-outlet-passage-for-gear 931 is formed so as to open from the in-shaft lubricant passage 91 to the vicinity of the engaging teeth 41 of the first transmission gear 4, the lubricant can be squirted from a near position to thereby efficiently perform the lubrication.

Further, the outlet-passage-for-fork 932, which opens from the in-shaft lubricant passage 91 to the connecting portion 82 of the fork 8 and the fork shaft 9, and the fork-through-passage 83, which penetrates from the opening at a position facing the outlet-passage-for-fork 932 into the fork 8 and which opens at the facing surface 812 facing the groove portion 72 of the sleeve 7 are formed. Thus, even when the fork shaft 9, the fork 8 and the sleeve 7 are moved by the shift operation, the passage for supplying the lubricant also moves, so that the lubricant can be securely supplied to the groove portion 72 of the sleeve 7. Accordingly, the lubricant supplied to the groove portion 72 can flow in the groove portion 72 and can lubricate efficiently between the groove-sliding-surface 721 of the sleeve 7 and the sliding surface 811a of the nail portion 811 of the fork 8.

(First modified embodiment) A first modified embodiment will be specifically explained. The first modified embodiment has a structure, an action and an effect basically similar to those of the first embodiment. Different parts will be mainly explained.

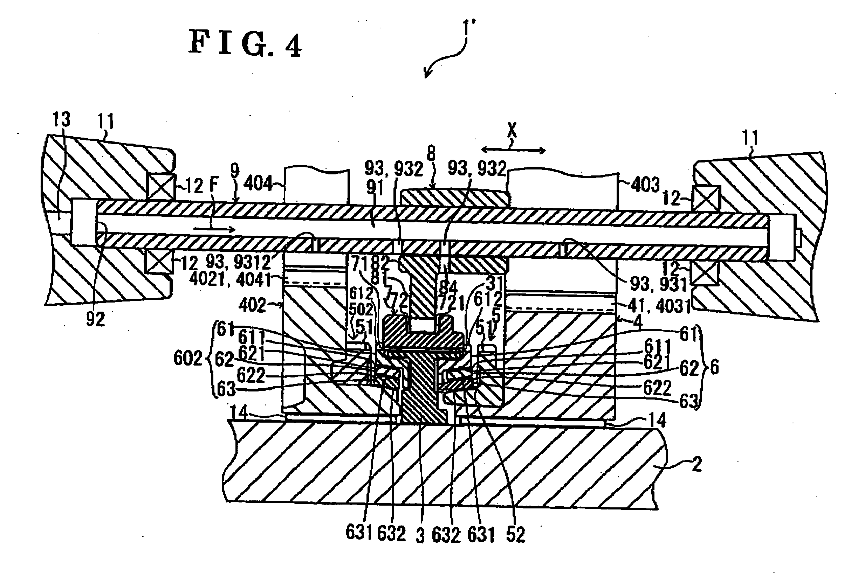

Fig. 4 is a partial cross-sectional view of a transmission 1' according to the first modified embodiment. In the transmission 1' according to the first modified embodiment, the fork 8 does not include the fork-through-passage 83 described in the first embodiment. In the first embodiment, the first end of the fork-through-passage 83 opens at the inner peripheral surface of the connecting portion 82 of the fork 8 and the fork shaft 9 and the second end of the fork-through-passage 83 opens at the facing surface 812 of the arc-shaped portion 81 of the fork 8. The fork 8 includes a connecting-portion-passage 84. A first end of the connecting-portion-passage 84 opens at the inner peripheral surface of the connecting portion 82 of the fork 8 and the fork shaft 9 and a second end of the connecting-portion-passage 84 opens at the outer peripheral side of the connecting portion 82. The second end of the connecting-portion-passage 84 opens at a position displaced from the arc-shaped portion 81 in the axial direction. Two outlet-passages-for-fork 932 are formed. A first end of a first outlet-passage-for-fork 932 opens to the in-shaft lubricant passage 91. A second end of the first outlet-passage-for-fork 932 opens at a position in the vicinity of the connecting portion 82 of the fork 8 displaced from the connecting portion 82 in the axial direction. A first end of a second outlet-passage-for-fork 932 opens to the in-shaft lubricant passage 91. A second end of the second outlet-passage-for-fork 932 opens at a position facing the connecting-portion-passage 84 of the fork 8. The first ends of the first and second outlet-passages-for-fork 932 position at a higher position in a perpendicular direction as same as the first embodiment.

According to the outlet-passages-for-fork 932 and the connecting-portion-passage 84 of the transmission 1' of the first modified embodiment, the lubricant discharged from the in-shaft lubricant passage 91 flows into the outlet-passages-for-fork 932 and is discharged from openings of the second end sides of the outlet-passages-for-fork 932 to the vicinity of the connecting portion 82 of the fork 8. Because the fork 8 moves in the axial direction and does not rotate, a first flow of the lubricant goes along the fork 8, flows from the connecting portion 82 to the arc-shaped portion 81 and flows to the groove portion 72 of the sleeve 7. Further, a second flow of the lubricant goes through the connecting-portion-passage 84. Then, the lubricant is discharged to the vicinity of the arc-shaped portion 81 and flows to the groove portion 72 of the sleeve 7. The lubricant flowing to the groove portion 72 flows on the groove portion 72 and lubricates between the groove-sliding-surface 721 of the sleeve 7 and the sliding surface 811a of the fork 8.

(Second modified embodiment) Preferred embodiments of the present invention have been explained above. However, the present invention is not limited to the embodiments described above. For example, it is possible that the second end of the fork-through-passage 83 opens at the sliding surface 811a or in the vicinity of the sliding surface 811 a of the nail portion 811 of the fork 8 in the first embodiment, and the fork-through-passage 83 is formed to penetrate from the connecting portion 82 into the arc-shaped portion 81.

It is also possible that the lubricant supply passage 92 opens not only at the first end of the fork shaft 9 but opens at both ends of the fork shaft 9. Further, it is also possible to provide, for each of the first transmission gear 4 and the second transmission gear 402, not one but plural outlet-passages-for-gear 931 in the axial direction or in the circumferential direction. It is also possible to provide plural outlet-passages-for-fork 932 according to a combination of the first embodiment and the first modified embodiment.

Further, it is possible that the opening of the lubricant outlet passage 93 at the side of the in-shaft lubricant passage 91 is wider than the opening at the side of the outlet, in other words, the lubricant outlet passage 93 has a tapered shape, by which the lubricant can be directed more efficiently. It is also possible that the opening of the lubricant outlet passage 93 at the side of the in-shaft lubricant passage 91 is narrower than the opening at the side of the outlet, in other words, the lubricant outlet passage 93 has a tapered shape, by which the lubricant can be squirted to a wider range.

## Claims

1. A synchromesh gear transmission incorporating a fork (8) mounted on a fork shaft (9) for moving a synchromesh sleeve (7) of the transmission to engage and disengage at least one transmission gear (4), and a piped lubrication system for delivering lubricant to the transmission,
**characterized in that**
the piped lubrication system comprises lubricant passages (91,92,93) through the shift fork shaft (9) for delivering lubricant in use to one or more positions near to the transmission gear or gears (4) and the sleeve (7).

2. A transmission according to claim 1, wherein the piped lubrication system further comprises a lubricant fork-through-passage (83), through a sleeve-engaging portion (811) of the fork (8), for receiving lubricant in use from the lubricant passages (91,92,93) and delivering it through the fork-through-passage (83) to a position near to the sleeve (7).

3. A transmission (1) according to claim 1 or claim 2, wherein the piped lubrication system further comprises a lubricant connecting-portion-passage (84), through a connecting portion (82) of the fork (8) which connects the fork (8) to the shift shaft (9), for receiving lubricant in use from the lubricant passages (91,92,93) and delivering it through the connecting-portion-passage (84) to a position near to the sleeve (7).

4. A transmission (1) according to claim 1, comprising:
a rotary shaft (2);
a clutch hub (3) fixed to the rotary shaft (2) and having engaging teeth (31) at an outer periphery of the clutch hub (3);
a transmission gear (4) rotatably provided at the rotary shaft (2);
a gear piece (5) connected to the transmission gear (4) at the side of the clutch hub (3) and having engaging teeth (51) at an outer periphery of the gear piece (5);
a synchronizer ring (6) positioned between the clutch hub (3) and the gear piece (5);
a sleeve (7) having engaging teeth (71), which engage with the engaging teeth (31) of the clutch hub (3) and the engaging teeth (51) of the gear piece (5), the sleeve (7) being held by the clutch hub (3) and being slidable in an axial direction;
a fork (8) having an arc-shaped portion (81) having a facing surface (812) facing an outer peripheral surface (721) of the sleeve (7) and engaging with the outer peripheral surface (721) of the sleeve (7) and being slidable in a circumferential direction and a connecting portion (82) positioned at an opposite side of the facing surface (82) of the arc-shaped portion (81);
a fork shaft (9) connected to the connecting portion (82) of the fork (8) as a unit for shifting the fork (8) in the axial direction to move the sleeve (7) in the axial direction between a neutral position and a shift position, the engaging teeth (71) of the sleeve (7) engaging with the engaging teeth (31) of the clutch hub (3) in the neutral position and the engaging teeth (71) of the sleeve (7) engaging with the engaging teeth (31) of the clutch hub (3) and the engaging teeth (51) of the gear piece (5) in the shift position;
the transmission (1) performing an operation of synchronization of rotation of the clutch hub (3) and the transmission gear (4), to achieve a gear shift operation, by shifting the fork (8) in the axial direction by the fork shaft (9), to slide the sleeve (7) from the neutral position to a position engaging the gear piece (5), by frictionally engaging the synchronizer ring (6) with the gear piece (5);
wherein the piped lubrication system comprises
an in-shaft lubricant passage (91) provided through the fork shaft (9),
a lubricant supply passage (92), and
at least one lubricant outlet passage (93),
a first end of the lubricant supply passage (92) opening to the in-shaft lubricant passage (91),
a second end of the lubricant supply passage (92) opening to an outside of the fork shaft (9),
a first end side of the lubricant outlet passage (93) opening to the in-shaft lubricant passage (91) and
a second end side of the or each lubricant outlet passage (93) opening at a position near the transmission gear (4) and the sleeve (7).

5. A transmission (1) according to claim 4, wherein
the second end side of one of the one or more lubricant outlet passages (93) of the fork shaft (9) opens at a portion at which the connecting portion (82) of the fork (8) connects with the fork shaft (9), and the fork (8) includes a fork-through-passage (83),
a first end side of the fork-through-passage (83) opening to the connecting portion (82) and
a second end side of the fork-through-passage (83) opening at the facing surface of the arc-shaped portion (81).

6. A transmission (1) according to claim 4 or claim 5, wherein
the second end side of one of the one or more lubricant outlet passages (93) of the fork shaft (9) opens at a portion at which the connecting portion (82) of the fork (8) connects with the fork shaft (9), and the fork (8) includes a connecting-portion-passage (84),
a first end side of the connecting-portion-passage (84) opening to the said second end side of the said lubricant outlet passage (93) and
a second end side of the connecting-portion-passage (84) opening at a position near to the sleeve (7).
